# EUROPEAN PATENT SPECIFICATION

(11) **EP 4 258 440 B1**
(45) Date of publication and mention of the grant of the patent: **16.07.2025**
(21) Application number: 23154060.0
(22) Date of filing: 30.01.2023
(51) Int. Cl.: H01M 50/209, H01M 50/244, H01M 50/258, H01M 50/262, H01M 50/293, H01M 50/503, H01M 50/507, H01M 50/533, H01M 50/54, H01M 50/548, H01M 50/553

(54) **BATTERY MODULE AND BATTERY PACK**
BATTERIEMODUL UND BATTERIEPACK
MODULE DE BATTERIE ET BLOC-BATTERIE

(30) Priority: 30.03.2022 CN 202220737304 U
(43) Date of publication of application: 11.10.2023
(73) Proprietor: Beijing WeLion New Energy Technology Co., Ltd, Beijing 102402 (CN)
(72) Inventor: FU, Yimin, Beijing 102402 (CN); SHENG, Jun, Beijing 102402 (CN); YU, Huigen, Beijing 102402 (CN)
(74) Representative: reuteler & cie SA

(56) References cited:
- DE-B3- 102020 108 826
- JP-A- 2013 229 266
- US-A1- 2014 248 516
- US-A1- 2014 248 518

## Description

### FIELD

The present invention relates to the field of power batteries, in particular to a battery module and a battery pack.

### BACKGROUND

With the aggravation of environmental and energy problems in recent years, new energy electric vehicles have gradually come into people's field of vision. As the main power source for new energy vehicles, lithium-ion power battery packs have also received extensive attention. The power battery module is the most important part of a power battery pack, and is composed of a plurality of battery cells. According to the appearance and structural form, battery cells are generally categorized into cylindrical battery cells, prismatic battery cells and pouch battery cells. It is the most difficult to assemble pouch battery cells into modules owing to the structural characteristics of pouch battery cells. At present, in the pouch battery cell assembling techniques, usually several pouch battery cells are stacked vertically into a greater module, and then the modules are integrated into a pack. Such a battery cell assembling method has the following drawbacks:
(1) Since the battery cell is vertically arranged in the height direction of the battery pack, it is difficult to use the space in the height direction flexibly, consequently the space utilization in the height direction is poor;
(2) The assembling process is complex, and the battery pack is heavy and can't be transported easily.

DE 10 2020 108 826 B3 discloses a battery module for an electrically driven vehicle and method for manufacturing the battery module, US 2014/0248518 A1 discloses a power supply device, JP 2013-229266A discloses a batter pack and US2014248516A1 discloses a power supply device.

### SUMMARY OF THE INVENTION

In order to solve or at least partially solve the above technical problems, the present invention provides a battery module and a battery pack. The invention is set forth in claim 1. Dependent claims recite advantageous embodiments of the invention.

The battery module provided by the present invention comprises a battery cell assembly and carriers arranged at two ends of the battery cell assembly, wherein the battery cell assembly comprises a plurality of battery cells stacked in the vertical direction, the two ends of each of the plurality of battery cells are respectively connected to the two carriers, the carriers are provided with electric connection plates therein, and the tabs of the battery cells are connected to the electric connection plates.

Optionally, the carrier is provided with a plurality of first openings in a side of the carrier connected to the battery cells, the first openings are in one-to-one correspondence with the tabs of the battery cells, the electric connection plate is provided with second openings at positions corresponding to the first openings, the tabs pass through the first openings and the second openings and are bent at a side of the electrical connection plate away from the battery cells to form flaps, and the flaps are fitted to the electrical connection plate.

Optionally, the side of the carrier connected to the battery cells is provided with a plurality of partitions at an interval in the vertical direction, and a clamping socket into which an end of the battery cell can be inserted is formed between every two adjacent partitions, and each clamping socket corresponds to at least one of the first openings.

Optionally, each clamping socket corresponds to two first openings, and two cells connected to the same clamping socket form a battery cell group, and foam is provided between every two adjacent battery cell groups.

Optionally, the side of the electrical connection plate away from the battery cells is provided with a connecting part for connecting to a busbar, and a side of the carrier away from the battery cells is provided with a via hole at a position corresponding to the connecting part.

The carrier is provided with a slot, and the electrical connection plate is inserted into the slot.

The slot comprises a first slot body and a second slot body that are oppositely arranged in a horizontal direction, the electrical connection plate comprises a first electrical connection plate body fitted with the first slot body and a second electrical connection plate body fitted with the second slot body, an insertion end of the first electrical connection plate body is provided with an extension part, the tabs of the battery cells are connected to the first electrical connection plate body, and the connecting part is an electrode pole arranged on a side of the second electrical connection plate body away from the battery cells, and is configured in a way that the extension part of the first electrical connection plate body inserted into the first slot body is fitted to a part of the second electrical connection plate body inserted into the second slot body.

Optionally, the side of the carrier away from the battery cells is provided with a partitioned bottom plate in the horizontal direction, and there are two groups of slots arranged in the two sides of the partitioned bottom plate, and the second slot bodies of the two groups of slots are arranged in opposite directions.

Optionally, the side of the carrier away from the battery cells is provided with an opening at a position corresponding to the first slot body, and the opening is covered by a cover plate, and a side of the partitioned bottom plate away from the battery cells is provided with a clip for connecting with the cover plate.

The present invention further provides a battery pack, which comprises a box and a plurality of battery modules arranged inside the box.

Compared with the prior art, the technical scheme provided in the embodiments of the present invention has the following advantages:
In the battery module in the present invention, the battery cells are stacked in the vertical direction, so that the number of battery cells can be determined according to the design height of the battery pack. Thus, the space utilization ratio in the height direction is high and flexible. It is only required to connect the carriers to the two sides of the battery cells during the installation, and it is unnecessary to pack the sides of the battery cells. Therefore, the installation is convenient, the cost can be reduced, the heat dissipation effect of the battery cells can be improved, and the weight of the battery module can be reduced, thereby the overall weight of the battery pack can be reduced to meet the design requirements. In the present invention, battery modules are used to replace conventional modules. Thus, the battery pack has higher capacity, and the bottom shell and the top cover of the box have a position-limiting effect on the battery modules, thereby the adverse effect of battery cell expansion on the battery pack is greatly reduced, and the overall rigidity of the battery pack can be improved as well.

### BRIEF DESCRIPTION OF DRAWINGS

The accompanying drawings, which are incorporated in and constitute a part of this specification, illustrate embodiments consistent with the present invention, and are intended to be used together with the description to explain the principle of the present invention.

To make the technical scheme in the embodiments of the present invention or in the prior art understood better, hereunder the accompanying drawings used in the description of the embodiments or the prior art will be introduced briefly. Apparently, those having ordinary skills in the art can obtain drawings of other embodiments on the basis of these drawings without expending any creative labor.
Fig. 1 is a structural schematic diagram of the battery module according to an embodiment of the present invention;
Fig. 2 is an exploded view of the battery module according to the embodiment of the present invention;
Fig. 3 is a schematic structural diagram of the side of the carrier connected to the battery cells in the embodiment of the present invention;
Fig. 4 is a schematic structural diagram of the side of the carrier away from the battery cells in the embodiment of the present invention;
Fig. 5 is a structural schematic diagram of the first electrical connection plate body in the embodiment of the present invention;
Fig. 6 is a structural schematic diagram of the second electrical connection plate body in the embodiment of the present invention;
Fig. 7 is a structural schematic diagram of the cover plate in the embodiment of the present invention;
Fig. 8 is a schematic structural diagram of the battery module according to the embodiment of the present invention after the tabs is connected to the first electrical connection plate body;
Fig. 9 is a structural schematic diagram of the battery pack according to an embodiment of the present invention;
Fig. 10 is an exploded view of the battery pack according to the embodiment of the present invention; and
Fig. 11 is a schematic diagram of the arrangement of the bottom shell of the battery pack according to the embodiment of the present invention.

### Reference Numbers

1 - battery cell assembly; 2 - carrier; 21 - first opening; 22 - partition; 23 - clamping socket; 24 - partitioned bottom plate; 3 - battery cell; 31 - tab; 32 - flap; 4 - second opening; 5 - foam; 51 - thermally conductive adhesive; 6 - first slot body; 61 - second slot body; 7 - first electrical connection plate body; 71 - second electrical connection plate body; 72 - extension part; 73 - electrode pole; 8 - cover plate; 81 - clip; 82 - catch groove; 83 - limiting groove; 9 - box; 91 - bottom shell; 92 - top cover; 93 - mounting socket; 94 - mounting pole.

### DETAILED DESCRIPTION OF THE EMBODIMENTS

To make the above-mentioned object, features and advantages of the present invention understood more clearly, hereunder the technical scheme of the present invention will be further detailed. It should be noted that the embodiments of the invention and the features in the embodiments can be combined freely, provided that there is no confliction between them. Although many specific details are set forth in the following description to facilitate fully understanding the present invention, but the present invention may also be implemented in other ways different from that described herein; apparently, the embodiments in the description are only part of the possible embodiments of the present invention, but are not all possible embodiments

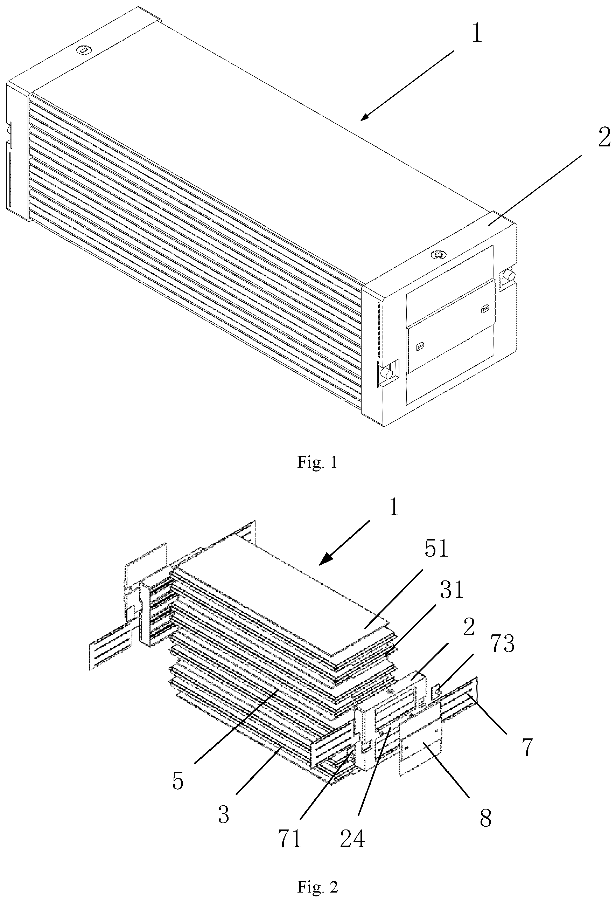

As shown in Figs. 1 and 2, the battery module provided in an embodiment of the present invention comprises a battery cell assembly 1 and two carriers 2 arranged at two ends of the battery cell assembly 1, which is to say, two carriers 2 are provided, and are arranged at the two ends of the battery cell assembly 1 respectively, and the carriers 2 are made of an insulating material. The battery cell assembly 1 comprises a plurality of battery cells 3 stacked in the vertical direction, and the battery cells 3 can be connected with each other by bonding. Foam 5 may be provided between every two adjacent battery cells 3; alternatively, a plurality of adjacent cells 3 may be grouped into a battery cell group according to the actual requirement, and foam 5 may be provided between two adjacent battery cell groups. The two ends of each of the plurality of battery cells 3 are respectively connected to two carriers 2, each carrier 2 is provided with electric connection plates therein, and the tabs 31 of the battery cells 3 are connected to the electric connection plates. The electrical connection plate may be arranged on the side of the carrier 2 facing the battery cells 3, and, in that case, the tabs 31 may be directly connected to the electrical connection plate. Moreover, the electrical connection plate may be arranged inside the carrier 2. In that case, the tabs 31 should pass through the side of the carrier 2 close to the battery cells 3 and then should be connected to the electrical connection plate. Preferably, the positive and negative tabs 31 of the battery cell 3 are led out through the two sides of the long side of the battery cell 3.

In the battery module in the present invention, the battery cells 3 are stacked in the vertical direction, so that the number of the battery cells 3 can be determined according to the design height of the battery pack, and the space utilization in the height direction is high and flexible. It is only required to connect the carriers to the two sides of the battery cells 3 during the installation. Therefore, the installation process is convenient and doesn't require the participation of several workers, thereby the labor cost is reduced. In addition, it is unnecessary to pack the sides of the battery cells 3. Therefore, the cost can be reduced, the heat dissipation effect of the battery cells 3 can be improved, the weight of the battery module can be reduced, thereby the overall weight of the battery pack be reduced to meet the design requirements.

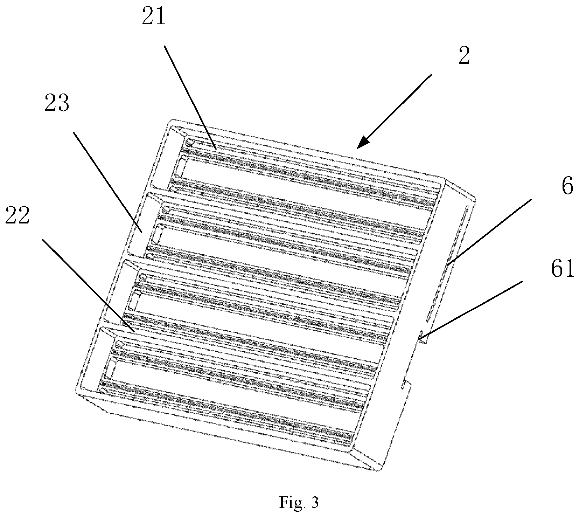

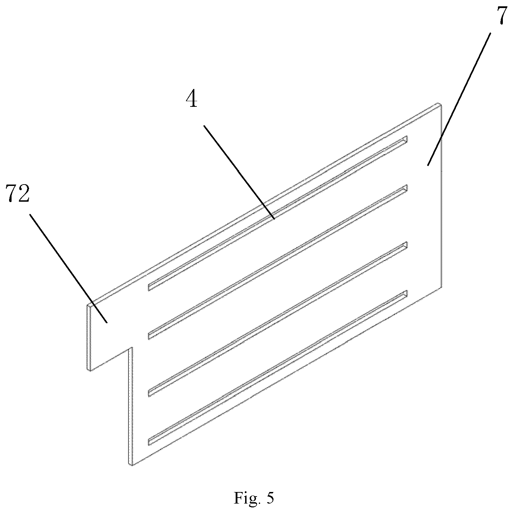

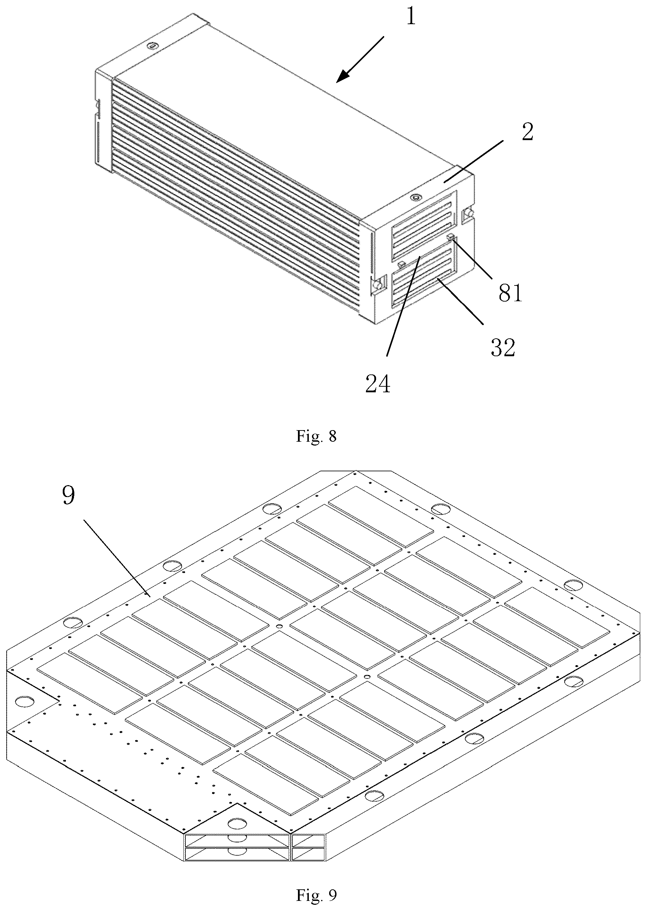

In some embodiments, as shown in Figs. 2 and 3, the electrical connection plate is inserted inside the carrier 2, and, in that case, a plurality of first openings 21 are formed in the side of the carrier 2 connected to the battery cells 3, and the first openings 21 are arranged at an interval in the vertical direction and extend in the horizontal direction. The first openings 21 are in one-to-one correspondence with the tabs 31 of the battery cells 3, which is to say, the number of the first openings 21 of each carrier 2 is the equal to that of the battery cells 3, and the first openings 21 are at positions opposite to the battery cells 3 in the horizontal direction. As shown in Figs. 5 and 8, the electrical connection plate is provided with second openings at positions corresponding to the first openings 21, and the tabs 31 pass through the first openings 21 and the second openings 4, and are bent at the side of the electrical connection plate away from the battery cells 3 to form flaps 32, which are fitted to the electrical connection plate. The electrical connection plate may be welded to the flaps 32 to ensure the fixing effect. Such a design improves the convenience of connection of the tabs 31 to the electrical connection plate, while ensuring a firm connection.

As shown in Fig. 3, the side of the carrier 2 connected to the battery cells 3 is provided with a plurality of partitions 22 at an interval in the vertical direction, and a clamping socket 23 into which an end of the battery cell 3 can be inserted is formed between every two adjacent partitions 22, and each clamping socket 23 corresponds to at least one of the first openings 21. In such a design, the ends of the battery cells 3 can be clamped in the clamping sockets 23, and the tabs 31 of the battery cells 3 inserted into the clamping sockets 23 can be inserted into the corresponding first openings 21, and then connected to the electrical connection plates. The battery cells 3 can be separated from each other by means of the partitions 22, which is beneficial to uniform stress distribution on each battery cell 3 and high life consistency of the battery cells 3. Specifically, in the case that the clamping socket 23 corresponds to one first opening 21, a battery cell 3 is inserted into each clamping socket 23, and the tabs 31 of the battery cell 3 are inserted into the first opening 21 corresponding to the clamping socket 23, and then connected to the electrical connection plates. In the case that the clamping socket 23 corresponds to a plurality of first openings 21, a plurality of battery cells 3 are inserted into the clamping socket 23, and the tabs 31 of the battery cells 3 are respectively inserted into the corresponding first openings 21, and then connected to the electrical connection plates. Optimally, each clamping socket 23 corresponds to two first openings 21, which is to say, two battery cells 3 may be clamped in each clamping socket 23. The two cells 3 connected to the same clamping slot 23 forms a battery cell group, and foam 5 is provided between every two adjacent battery cell groups. A backing may be provided on each of the two sides of the foam 5, so that the thickness of the foam 5 is consistent with the thickness of the partitions 22. To ensure the installation effect, the length of the foam 5 should be smaller than that of the battery cell 3, so that the foam 5 will not interfere with the battery cell 3 during the installation.

The side of the electrical connection plate away from the battery cells 3 is provided with a connecting part for connecting to a busbar, and a side of the carrier 2 away from the battery cells 3 is provided with a via hole at a position corresponding to the connecting part. Such a connecting part may be formed by the electrical connection plate itself, or it may be an electrode pole 73 arranged on the electrical connection plate. In the case that the connecting part is an electrode pole 73, a part of the electrode pole 73 can pass through the via hole and then be connected to the busbar, so as to improve the convenience of connection.

The carrier 2 is provided with a slot, and the electrical connection plate is inserted into the slot, so as to improve the convenience of connection.

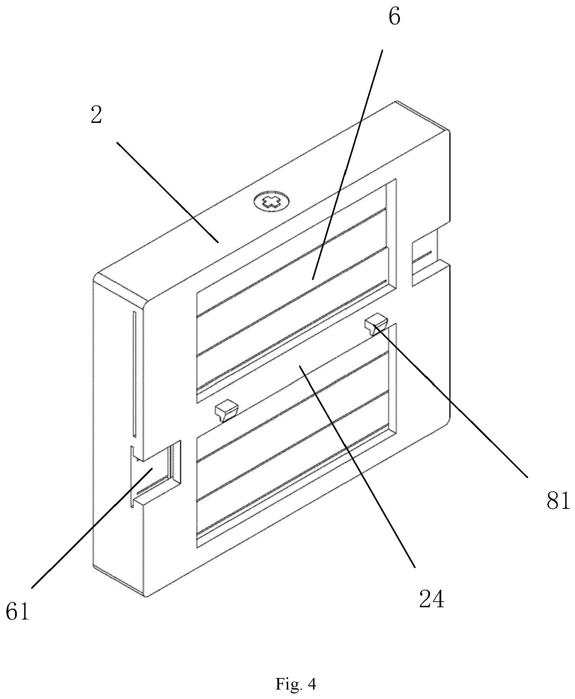

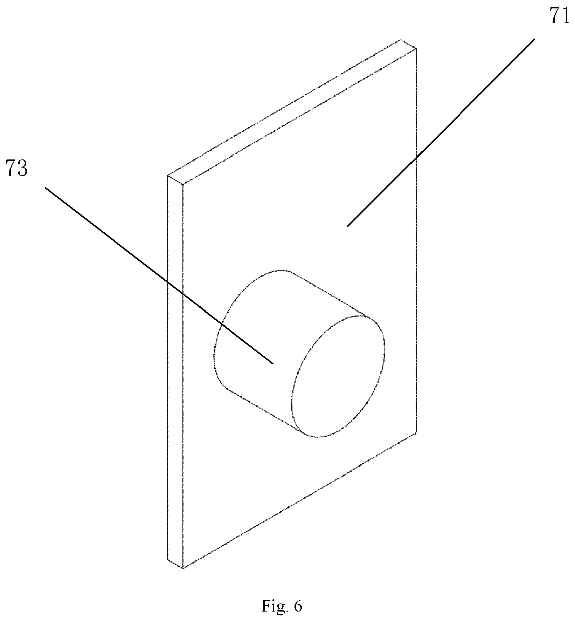

Specifically, as shown in Figs. 4, 5 and 6, the slot comprises a first slot body 6 and a second slot body 61 that are oppositely arranged in the horizontal direction, and the electrical connection plate comprises a first electrical connection plate body 7 fitted to the first slot body 6 and a second electrical connection plate body 71 fitted to the second slot body 61. The insertion openings of the first slot body 6 and the second slot body 61 extend to the sides of the carrier 2, so as to facilitate the installation of the first electrical connection plate body 7 and the second electrical connection plate body 71. As shown in Fig. 5, the insertion end of the first electrical connection plate body 7 is provided with an extension part 72, where the insertion end is the end of the first electrical connection plate body 7 inserted into the first slot body 6, and the tabs 31 of the battery cells 3 are connected to the first electrical connection plate body 7. Specifically, the second openings 4 are formed in the first connection plate body. As shown in Fig. 6, in this design, the connecting part is an electrode pole 73 arranged on the side of the second electrical connection plate body 71 away from the battery cells 3. During the installation, the extension part 72 of the first electrical connection plate body 7 inserted into the first slot body 6 is fitted to a part of the second electrical connection plate body 71 inserted into the second slot body 61. Specifically, the first slot body 6 is in communication with the second slot body 61, and they are step-staggered from each other; thus, after the first electrical connection plate body 7 is inserted into the first slot body 6, the extension part 72 extends into the second slot body 61, and is fitted to a part of the second electrical connection plate body 71, so that the current can be transferred to the electrode pole 73. In order to ensure the fixing effect, the extension part 72 is welded to the second electrical connection plate body 71. It should be noted that the tail ends of the first electrical connection plate 7 and the second electrical connection plate 71 inserted into the first slot body 6 and the second slot body 61 should be at certain safe distance from the edge of the carrier 2 to prevent a short circuit.

Furthermore, as shown in Figs. 4 and 8, the side of the carrier 2 away from the battery cells 3 is provided with a partitioned bottom plate 24 in the horizontal direction; two groups of slots are arranged in the two sides of the partitioned bottom plate 24, which is to say, there are two first slot bodies 6 and two second slot bodies 61, one group of first slot body 6 and second slot body 61 is arranged above the partitioned bottom plate 24, the other group of first slot body 6 and second slot body 61 is arranged below the partitioned bottom plate 24, and the second slot body 61 in the two groups of slots are arranged opposite to each other, to facilitate the connection in series or in shunt to the busbar. Such a design facilitates the installation of the first electrical connection plate body 7 and the second electrical connection plate body 71, so that the electrical connection plates formed after the installation meets the design requirements.

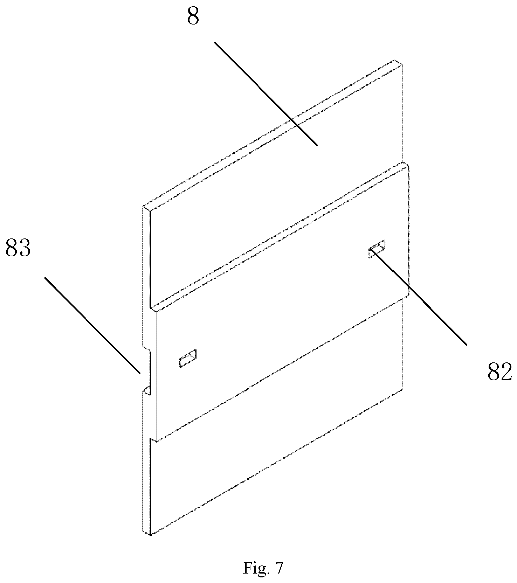

As shown in Figs. 4, 7 and 8, the side of the carrier 2 away from the battery cells 3 is provided with an opening at a position corresponding to the first slot body 6, and the opening is covered by a cover plate 8; and the side of the partitioned bottom plate 24 away from the battery cells 3 is provided with a clip 81 for connecting with the cover plate 8. During the installation, the tabs 31 of the battery cells 3 are inserted into the first opening 21 and the second opening 4 sequentially, and extend out of the side of the first electrical connection plate body 7 away from the battery cell 3. Then, as shown in Fig. 8, the extended end of the tab 31 is bent to form a flap 32, and then the flap 32 is welded to the first electrical connection plate body 7 to complete the connection. Finally, the cover plates 8 are clipped to the openings to conceal the first electrical connection plate body 7. Such a design facilitates the connection between the first electrical connection plate body 7 and the tabs 31 of the battery cell 3, and improves the convenience of operation. Moreover, the assembling process consisting of stacking, insertion, welding and capping is simple and clear. The finished product has an aesthetic appearance, is light in weight, and is convenient to handle in the assembling process. In addition, the cover plate 8 should be provided with a catch groove 82 fitted with the clip 81. The clip 81 is snap-fitted with the catch groove 82, so as to improve the convenience of mounting and removal of the cover plate 8. In the case that there are two first slot bodies 6 and the carrier 2 is provided with a partitioned bottom plate 24, the cover plate 8 should cover the two first slot bodies 6; in addition, the cover plate 8 should have a limiting groove 83 at a position corresponding to the partitioned bottom plate 24. After the installation, the partitioned bottom plate 24 is received in the limiting groove 83, so that the cover plate 8 can be mounted and positioned conveniently.

As shown in Figs. 9, 10 and 11, the present invention further provides a battery pack, which comprises a box 9 and a plurality of the above-mentioned battery modules arranged inside the box 9. The battery modules here include all the technical features of the above-mentioned battery modules; therefore, they are not further detailed here. Specifically, the box 9 should be made of a material that has certain structural hardness to ensure the service life. Preferably, the box 9 is made of aluminum profiles. The box 9 comprises a bottom shell 91 and a top cover 92, which are connected together by snap-fitting, which is beneficial for improving the overall rigidity and vibration performance of the battery pack.

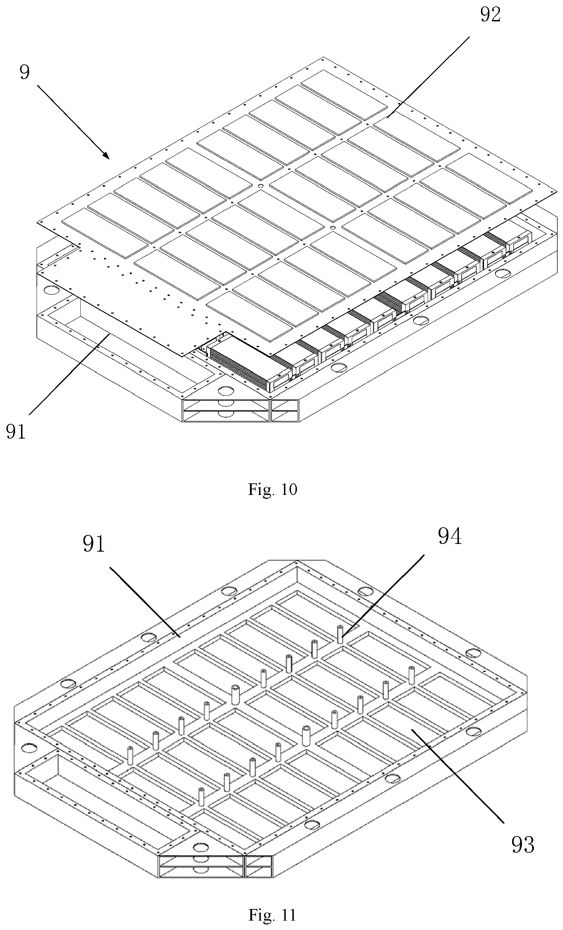

As shown in Fig. 11, a plurality of mounting sockets 93 for receiving the battery modules are formed at the top of the bottom shell 91, and the battery modules are embedded into the corresponding mounting sockets 93. Thus, the convenience of installation is improved, and the problems of complex process and poor consistency of the traditional assembling process are effectively solved. Preferably, the mounting sockets 93 are evenly arranged as required, thereby the space occupation is reduced. Further preferably, mounting poles 94 are provided on the longitudinal beams of the mounting sockets 93, and the mounting poles 94 are bolted to the top cover 92, so that the rigidity of the battery pack is effectively improved. In addition, points of connections to the vehicle body may also be arranged on the longitudinal beams. The top and bottom of the battery module are provided with thermally conductive adhesive 51 respectively for bonding to the bottom shell 91 and the top cover 92. Such an arrangement ensures the connection effect and is beneficial to the heat dissipation from the battery module through heat conduction. Further preferably, the two sides of the thermally conductive adhesive 51 are provided with a backing respectively, which can be used to adjust the overall thickness of the battery module to make the overall structure more compact. In addition, the battery modules are electrically connected after they are mounted in the box 9. The electrical connections are of a conventional design, and are not further detailed here. Moreover, permanent components of the battery pack, such as electrical components and liquid cooling plates, etc., should be provided in the box 9. Those components are not detailed individually here. In a battery pack in such a design, the battery cells 3 of the battery modules are laid horizontally and stacked, and the number of battery cells 3 in each battery module is limited. Besides, the material of the box 9 has high rigidity, and provides a position-limiting effect on the battery modules, which is very beneficial for controlling the expansion of the battery cells 3.

In the present invention, battery modules are used to replace conventional modules. Thus, the battery pack has higher capacity, and the bottom shell 91 and the top cover 92 of the box 9 have a position-limiting effect on the battery modules, thereby the adverse effect of the expansion of the battery cells 3 on the battery pack is greatly reduced, and the overall rigidity of the battery pack can be improved as well.

It should be noted that the relational terms such as "first", "second" or the like mentioned herein are only intended to distinguish one entity or operation from another entity or operation, without necessarily requiring or implying any such actual relationship or sequence between these entities or operations. Moreover, it should also be noted that the terms "comprise", "include" or any other variant thereof are intended to encompass non-exclusive inclusion, such that a process, method, article or device comprising a plurality of elements includes not only those elements but also other elements not listed explicitly, or further includes elements that are inherent to such a process, method, article or device. An element defined by the phrase "comprising a ... " does not exclude the presence of additional identical elements in the process, method, article or device including the element, provided that there is no more confinement.

## Claims

1. A battery module, comprising a battery cell assembly (1) and carriers (2) arranged at two ends of the battery cell assembly (1), wherein the battery cell assembly (1) comprises a plurality of battery cells (3) stacked in a vertical direction, two ends of each of the plurality of battery cells (3) are respectively connected to the two carriers (2), the carriers (2) are provided with electric connection plates therein, and tabs (31) of the battery cells (3) are connected to the electric connection plates, and wherein the carrier (2) is provided with a slot, and the electrical connection plate is inserted into the slot, **characterized in that**
the slot comprises a first slot body (6) and a second slot body (61) that are oppositely arranged in a horizontal direction,
the electrical connection plate comprises a first electrical connection plate body (7) fitted with the first slot body (6) and a second electrical connection plate body (71) fitted with the second slot body (61), an insertion end of the first electrical connection plate body (7) is provided with an extension part (72), the tabs (31) of the battery cells (3) are connected to the first electrical connection plate body (7), and the side of the second electrical connection plate body (71) away from the battery cells (3) is provided with an electrode pole (73) for connecting to a busbar, and is configured in a way that the extension part (72) of the first electrical connection plate body (7) inserted into the first slot body (6) is fitted to a part of the second electrical connection plate body (71) inserted into the second slot body (61).

2. The battery module of claim 1, wherein the carrier (2) is provided with a plurality of first openings (21) in a side of the carrier (2) connected to the battery cells (3), the first openings (21) are in one-to-one correspondence with the tabs (31) of the battery cells (3), the electric connection plate is provided with second openings (4) at positions corresponding to the first openings (21), the tabs (31) pass through the first openings (21) and the second openings (4) and are bent at a side of the electrical connection plate away from the battery cells (3) to form flaps (32), and the flaps (32) are fitted to the electrical connection plate.

3. The battery module of claim 2, wherein the side of the carrier (2) connected to the battery cells (3) is provided with a plurality of partitions (22) at an interval in the vertical direction, and a clamping socket (23) into which an end of the battery cell (3) can be inserted is formed between every two adjacent partitions (22), and each clamping socket (23) corresponds to at least one of the first openings (21).

4. The battery module of claim 3, wherein each clamping socket (23) corresponds to two first openings (21), and two cells (3) connected to the same clamping socket (23) form a battery cell group, and foam (5) is provided between every two adjacent battery cell groups.

5. The battery module of claim 1, wherein a side of the carrier (2) away from the battery cells (3) is provided with a via hole at a position corresponding to the electrode pole (73).

6. The battery module of claim 1, wherein the side of the carrier (2) away from the battery cells (3) is provided with a partitioned bottom plate (24) in the horizontal direction, and there are two groups of slots arranged in the two sides of the partitioned bottom plate (24), and the second slot bodies (61) of the two groups of slots are arranged in opposite directions.

7. The battery module of claim 6, wherein the side of the carrier (2) away from the battery cells (3) is provided with an opening at a position corresponding to the first slot body (6), and the opening is covered by a cover plate (8), and a side of the partitioned bottom plate (24) away from the battery cells (3) is provided with a clip (81) for connecting with the cover plate (8).

8. A battery pack, comprising a box (9) and a plurality of battery modules of any of claims 1 to 7 arranged inside the box (9).

## Patentansprüche

1. Batteriemodul, umfassend eine Batteriezellenanordnung (1) und Träger (2), die an zwei Enden der Batteriezellenanordnung (1) angeordnet sind, wobei die Batteriezellenanordnung (1) eine Vielzahl von Batteriezellen (3) umfasst, die in einer vertikalen Richtung gestapelt sind, zwei Enden jeder der Vielzahl von Batteriezellen (3) jeweils mit den zwei Trägern (2) verbunden sind, die Träger (2) mit elektrischen Verbindungsplatten darin versehen sind, und Laschen (31) der Batteriezellen (3) mit den elektrischen Verbindungsplatten verbunden sind, und wobei der Träger (2) mit einem Schlitz versehen ist und die elektrische Verbindungsplatte in den Schlitz eingesetzt ist, **dadurch gekennzeichnet, dass**
der Schlitz einen ersten Schlitzkörper (6) und einen zweiten Schlitzkörper (61) umfasst, die in einer horizontalen Richtung entgegengesetzt angeordnet sind,
die elektrische Verbindungsplatte einen ersten elektrischen Verbindungsplattenkörper (7), der mit dem ersten Schlitzkörper (6) passend montiert ist, und einen zweiten elektrischen Verbindungsplattenkörper (71) umfasst, der mit dem zweiten Schlitzkörper (61) passend montiert ist, ein Einsetzungsende des ersten elektrischen Verbindungsplattenkörpers (7) mit einem Erweiterungsteil (72) versehen ist, die Laschen (31) der Batteriezellen (3) mit dem ersten elektrischen Verbindungsplattenkörper (7) verbunden sind und die von den Batteriezellen (3) abgewandte Seite des zweiten elektrischen Verbindungsplattenkörpers (71) mit einem Elektrodenpol (73) zum Verbinden mit einer Sammelschiene versehen ist, und derart ausgestaltet ist, dass der Erweiterungsteil (72) des ersten elektrischen Verbindungsplattenkörpers (7), der in den ersten Schlitzkörper (6) eingesetzt ist, an einem Teil des zweiten elektrischen Verbindungsplattenkörpers (71) passend montiert ist, der in den zweiten Schlitzkörper (61) eingesetzt ist.

2. Batteriemodul nach Anspruch 1, wobei der Träger (2) mit einer Vielzahl von ersten Öffnungen (21) in einer Seite des Trägers (2) versehen ist, die mit den Batteriezellen (3) verbunden ist, wobei die ersten Öffnungen (21) in einer Einszu-Eins-Beziehung mit den Laschen (31) der Batteriezellen (3) stehen, die elektrische Verbindungsplatte mit zweiten Öffnungen (4) an Positionen versehen ist, die den ersten Öffnungen (21) entsprechen, die Laschen (31) die ersten Öffnungen (21) und die zweiten Öffnungen (4) durchqueren und an einer von den Batteriezellen (3) abgewandten Seite der elektrischen Verbindungsplatte gebogen sind, um Klappen (32) zu bilden, und die Klappen (32) passend an der elektrischen Verbindungsplatte montiert sind.

3. Batteriemodul nach Anspruch 2, wobei die Seite des Trägers (2), die mit den Batteriezellen (3) verbunden ist, mit einer Vielzahl von Trennwänden (22) in einem Intervall in der vertikalen Richtung versehen ist, und eine Klemmbuchse (23), in die ein Ende der Batteriezelle (3) eingesetzt werden kann, zwischen allen zwei benachbarten Trennwänden (22) gebildet ist, und jede Klemmbuchse (23) mindestens einer der ersten Öffnungen (21) entspricht.

4. Batteriemodul nach Anspruch 3, wobei jede Klemmbuchse (23) zwei ersten Öffnungen (21) entspricht und zwei Zellen (3), die mit der gleichen Klemmbuchse (23) verbunden sind, eine Batteriezellengruppe bilden, und Schaum (5) zwischen allen zwei benachbarten Batteriezellengruppen bereitgestellt ist.

5. Batteriemodul nach Anspruch 1, wobei eine von den Batteriezellen (3) abgewandte Seite des Trägers (2) mit einem Durchgangsloch an einer Position versehen ist, die dem Elektrodenpol (73) entspricht.

6. Batteriemodul nach Anspruch 1, wobei die von den Batteriezellen (3) abgewandte Seite des Trägers (2) mit einer abgetrennten unteren Platte (24) in der horizontalen Richtung versehen ist, und zwei Gruppen von Schlitzen vorhanden sind, die in den zwei Seiten der abgetrennten unteren Platte (24) angeordnet sind, und die zweiten Schlitzkörper (61) der zwei Gruppen von Schlitzen in entgegengesetzten Richtungen angeordnet sind.

7. Batteriemodul nach Anspruch 6, wobei die von den Batteriezellen (3) abgewandte Seite des Trägers (2) mit einer Öffnung an einer Position versehen ist, die dem ersten Schlitzkörper (6) entspricht, und die Öffnung von einer Deckplatte (8) bedeckt ist, und eine von den Batteriezellen (3) abgewandte Seite der abgetrennten unteren Platte (24) mit einem Clip (81) zum Verbinden mit der Abdeckplatte (8) versehen ist.

8. Batteriepack, der einen Kasten (9) und eine Vielzahl von Modulen nach einem der Ansprüche 1 bis 7 umfasst, die im Inneren des Kastens (9) angeordnet sind.

## Revendications

1. Module de batterie comprenant un ensemble d'éléments de batterie (1) et des supports (2) agencés aux deux extrémités de l'ensemble d'éléments de batterie (1), dans lequel l'ensemble d'éléments de batterie (1) comprend une pluralité d'éléments de batterie (3) empilés dans une direction verticale, deux extrémités de chacun de la pluralité d'éléments de batterie (3) sont respectivement raccordées aux deux supports (2), les supports (2) sont prévus avec des plaques de raccordement électriques dans ces derniers, et les languettes (31) des éléments de batterie (3) sont raccordées aux plaques de raccordement électriques, et dans lequel le support (2) est prévu avec une fente, et la plaque de raccordement électrique est insérée dans la fente, **caractérisé en ce que** :
la fente comprend un premier corps de fente (6) et un second corps de fente (61) qui sont agencés à l'opposé dans une direction horizontale,
la plaque de raccordement électrique comprend un premier corps de plaque de raccordement électrique (7) monté avec le premier corps de fente (6) et un second corps de plaque de raccordement électrique (71) monté avec le second corps de fente (61), une extrémité d'insertion du premier corps de plaque de raccordement électrique (7) est prévue avec une partie d'extension (72), les languettes (31) des éléments de batterie (3) sont raccordées au premier corps de plaque de raccordement électrique (7) et le côté du second corps de plaque de raccordement électrique (71) à l'opposé des éléments de batterie (3) est prévu avec un pôle d'électrode (73) pour le raccordement à une barre omnibus, et est configuré de sorte que la partie d'extension (72) du premier corps de plaque de raccordement électrique (7) insérée dans le premier corps de fente (6) est montée sur une partie du second corps de plaque de raccordement électrique (71) insérée dans le second corps de fente (61).

2. Module de batterie selon la revendication 1, dans lequel le support (2) est prévu avec une pluralité de premières ouvertures (21) dans un côté du support (2) raccordé aux éléments de batterie (3), les premières ouvertures (21) sont en correspondance une à une avec les languettes (31) des éléments de batterie (3), la plaque de raccordement électrique est prévue avec des secondes ouvertures (4) dans des positions correspondant aux premières ouvertures (21), les languettes (31) passent à travers les premières ouvertures (21) et les secondes ouvertures (4) et sont pliées au niveau d'un côté de la plaque de raccordement électrique à l'opposé des éléments de batterie (3) afin de former des rabats (32) et les rabats (32) sont montés sur la plaque de raccordement électrique.

3. Module de batterie selon la revendication 2, dans lequel le côté du support (2) raccordé aux éléments de batterie (3) est prévu avec une pluralité de séparations (22) à un intervalle dans la direction verticale, et une douille de serrage (23) dans laquelle une extrémité de l'élément de batterie (3) peut être insérée, est formée toutes les deux séparations (22) adjacentes, et chaque douille de serrage (23) correspond à au moins l'une des premières ouvertures (21).

4. Module de batterie selon la revendication 3, dans lequel chaque douille de serrage (23) correspond aux deux premières ouvertures (21) et deux éléments (3) raccordés à la même douille de serrage (23) forment un groupe d'éléments de batterie et de la mousse (5) est prévue tous les deux groupes d'éléments de batterie adjacents.

5. Module de batterie selon la revendication 1, dans lequel un côté du support (2) à l'opposé des éléments de batterie (3) est prévu avec un trou d'interconnexion dans une position correspondant au pôle d'électrode (73).

6. Module de batterie selon la revendication 1, dans lequel le côté du support (2) à l'opposé des éléments de batterie (3) est prévu avec une plaque inférieure cloisonnée (24) dans la direction horizontale, et il y a deux groupes de fentes agencés dans les deux côtés de la plaque inférieure cloisonnée (24), et les seconds corps de fente (61) des deux groupes de fentes sont agencés dans des directions opposées.

7. Module de batterie selon la revendication 6, dans lequel le côté du support (2) à l'opposé des éléments de batterie (3) est prévu avec une ouverture dans une position correspondant au premier corps de fente (6), et l'ouverture est recouverte par une plaque de recouvrement (8) et un côté de la plaque inférieure cloisonnée (24) à l'opposé des éléments de batterie (3) est prévu avec une attache (81) pour se raccorder avec la plaque de recouvrement (8).

8. Bloc-batterie comprenant une boîte (9) et une pluralité de modules de batterie selon l'une quelconque des revendications 1 à 7, agencés à l'intérieur de la boîte (9).
